Europäisches Patentamt

European Patent Office

Office européen des brevets

(11) Publication number: **0 145 325**
**B1**

(12) **EUROPEAN PATENT SPECIFICATION**

(45) Date of publication of patent specification: **11.01.89**

(21) Application number: **84307899.9**

(22) Date of filing: **14.11.84**

(51) Int. Cl.⁴: **B 01 J 3/04, C 08 F 2/22 //**
**C08F18/08**

(54) Production of emulsion polymers.

| | |
|---|---|
| (30) Priority: **18.11.83 GB 8330804** | (73) Proprietor: **REED INTERNATIONAL P.L.C.**<br>**83, Piccadilly**<br>**London, W1A 1EJ (GB)** |
| (43) Date of publication of application:<br>**19.06.85 Bulletin 85/25** | |
| | (72) Inventor: **Adams, David Charles**<br>**58 Market Street**<br>**Old Harlow Essex CM17 OAQ (GB)** |
| (45) Publication of the grant of the patent:<br>**11.01.89 Bulletin 89/02** | |
| | (74) Representative: **Medlock, Edwin Roy**<br>**10 Victoria Road Grappenhall**<br>**Warrington, WA4 2EN (GB)** |
| (84) Designated Contracting States:<br>**AT BE CH DE FR GB IT LI LU NL SE** | |
| (56) References cited:<br>**EP-A-0 096 201**<br>**FR-A-1 503 642**<br>**FR-A-2 445 170**<br>**GB-A-1 124 610**<br>**GB-A-1 220 777**<br>**GB-A-1 345 459**<br>**GB-A-1 443 394**<br>**US-A-4 328 186** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background to the invention

This invention relates to the production of emulsion polymers. Emulsion polymers are currently made either in batch reactors or in continuously operated tubular loop reactors such as generally disclosed in GB—A—1,124,610 and GB—A—1,220,777. Batch operation is a long established process whilst the loop operation is more recent and has advantages in its compactness, cost effectiveness and continuous nature.

Among other advantages of the loop reactor principle is the ability to work easily at above normal atmospheric pressure and hence lower boiling point reactants can be used simply and effectively by the use of a pressure sustaining valve on the outlet of the loop reactor. By the use of a suitably set valve and matching construction of the loop, pressures many times ambient may be employed, allowing reaction in the presence of water considerably above 100°C.

It is an object of the present invention to provide reactor apparatus and processes for emulsion polymers which show advances over known reactors. For example, small particle size emulsions can be produced and better conversion of monomer achieved.

Other objectives of the present invention are to produce emulsions with higher viscosity per unit stabiliser than can be produced with known reactor and to provide an improved continuous reactor system in which core and shell, and other modified emulsion polymers, can be made.

Despite the advantages outlined earlier, the prior art loop reactor system has disadvantages. Firstly, the reacting mixture is in a "steady state" condition and an equilibrium exists between the production of a new polymer particles and the growth of existing particles. As the conversion of monomer to polymer is substantially complete in one circuit of the loop, it is difficult to disturb this equilibrium and thereby to modify the particle size distribution of the product. One consequence of this is the need to use substantial quantities of surfactants when small particle size polymer of monomers exhibiting significant water solubility are required. Another consequence is that, because of the steady state conditions and the recirculation of the reaction mixture, a uniform product is produced over a period of time and this is not always desired. Should the monomer, or monomers, pumped into the loop be modified in respect of type (and/or ratio in the case of a mixture of monomers), the composition of the polymer changes from the first composition to the second in an exponential relationship and at a rate which is governed by the mean residence time in the reactor. On the other hand, a change of composition in the monomer in-feed in the case of a batch reactor system results (in the absence of surfactant addition to create new particles) in the growth of existing particles by creating a shell over the existing particles (which can then be regarded as cores) of the first monomer composition. The ability to form core and shell polymers is an asset which is not available using known loop reactor systems but, as stated above, one of the objects of the invention is to provide a continuous system whereby core and shell polymers can be made.

The prior art loop reactor also has the disadvantage that, because a circulation is involved, the reaction temperature cannot vary substantially from one part of the reactor to another. This disadvantage is overcome with the present invention.

It has also been noted with the prior art loop reactor system that particle sizes (both average sizes and range of sizes) of emulsions can be reduced if initiation is carried out in the presence of higher monomer concentrations (i.e. low monomer conversion), or if short residence times are used. The latter process conditions are often accompanied by the former. However, if in an attempt to produce small particle sizes, very short (e.g. less than 4 minutes) residence times are utilised, then insufficient time is allowed for the conversion of monomer to polymer and the product drawn from the reactor always has an unacceptably high unreacted monomer content. For commercial production of a practical maximum of about 5.0% on total weight emulsion weight at the discharge from the loop is desired. Preferably the unreacted monomer discharged should be under 1%. A high level of residual monomer would be undesirable in a final commercial product for sale or use as it will be economically inefficient and could lead to problems of odour, toxicity or discolouration in the end application. Thus, using prior art loop systems it is necessary to treat the product, e.g. by maturing the emulsion preferably with additional initiator, in a suitable tank for the time necessary to reduce the level of monomer before packing or use.

Features and aspects of the invention

The invention provides a process for making emulsion polymerised products using a pressurised and force circulated loop reactor of tubular form so that reactant feeds and reactant products experience recirculation therein characterised in that the process comprises take-off from the loop reactor via a flow through reactor forming with the loop reactor a reactor apparatus having two sections namely a loop section (10) and a plug section (11) and the loop section is controlled so that a partially developed product arises of established particle size with unreacted monomer present in the range of 5 to 20% and the plug section is controlled so that a fully developed product emerges from the plug section having unreacted monomer present of less than 5% and an average particle size of less than 2.5 µm.

The invention accordingly provides a single reactor, having two serial sections, in which a continuous polymerisation process can be conducted in two steps each of which can accept its own control elements generally independently of the other, and in doing so achieves either a better product or a cheaper product or even a product unobtainable by other means or not so advantageously obtainable. Finer particle size

EP 0 145 325 B1

products may be readily obtained and this may lead to equivalent viscosity products being made using lower amounts of stabiliser. This can result in a significant cost saving and improved quality of product.

Different reaction temperatures can be used in the two sections and, with the plug section, various zones of temperature can be created. This is one of the significant advantages of the current invention since by employing a high temperature in the plug section, unreacted monomer is reacted quicker resulting in lower residual monomer in product. In turn this means that the reactor output may be substantially increased over similar sized previously known loop reactors whilst still retaining acceptably low resdiual monomers levels. The higher temperature of the plug section is particularly useful in completing the polymerisation when using monomers of poor reactivity. If required, the pressure sustaining valve of the reactor can be arranged at the end of the plug section allowing temperatures considerably in excess of 100°C to be employed without the danger of destablising the emulsion due to boiling of the water in the reaction mixture. The value of the temperature zoning of the plug section is not restricted to the reduction of unreacted monomer levels and it is anticipated that under some circumstances low temperature sections as well as high temperature sections, and even the use of the plug section in an isothermal mode will give advantages over prior art loop reactors. Also, the use of simple cooling jackets placed at any position within the plug reactor either before or after the pressure sustaining valve is within the scope of the invention as envisaged.

Another feature of the reactor is that the volume of the loop section will generally be low compared to the total reactor volume. Typically, the loop section has a volume less than one third of the total volume. A pilot plant scale reactor has been constructed with 500 ml loop volume and 1800 ml plug volume. Therefore reactants have comparatively lower residence times within the loop section compared with the prior art system when running at identical outputs and for similar overall reactor volumes. The low residence times employed in the loop section of this invention give rise to initiation in the presence of high monomer concentrations and to the production of low particle sizes. In some commercial applications only emulsion polymers with very low particle sizes and narrow particle size distributions are acceptable which are not obtainable with known reactors. Further the production of low particle sizes in the presence of high monomer concentration was not to be expected in any known reactor but is realised with the invention.

One further example of the use of reactors in accordance with the invention is for the production of core and shell polymers. This can be achieved by introducing a further monomer or mixture of several monomers into the reactor at some appropriate position within the plug section. The core of the polymer particles would then consist of the monomer or monomers fed into the loop section, and the shell would be predominantly that of the monomer or monomers fed into the plug section.

A further use envisaged for a temperature zoned plug section of the reactor is for modifying (e.g. cross-linking) polymers where a component of the monomer mixture is capable of further reaction at temperatures above those used for polymerisation. Polymer particles may be expanded using this type of reactor if a blowing agent is incorporated within the formulation which does not appreciably react at polymerisation temperature. (Expansion could, incidentally, be performed in emulsion polymer-producing reactor systems not essentially in accordance with the invention). These reactions may take place at temperatures in excess of 100°C and the placement of the pressure valve at the termination of the high temperature section of the plug reactor can be readily arranged.

The reaction of monomers may, us an addition or an alternative to employing a zone of high temperature, be further increased by the continual introduction of additional initiator into the plug section. This initiator may comprise one or both components of a redox couple or a thermally dissociated type such as a persulphate. Likewise the pH and the ionic strength may be adjusted by the addition of appropriate solutions as desired and additional surfactant or colloid (such as hydroxyethyl cellulose) could be supplied.

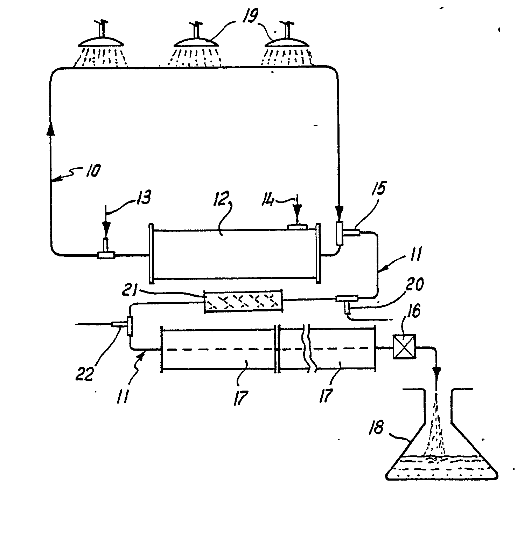

Description of the drawing

One form of the invention will now be described with reference to the accompanying drawing, which is a flow diagram.

Description of a preferred embodiment

A pilot scale reactor consists of a loop section 10 and a plug section 11. The loop section includes a positive displacement pump 12. The loop section is 110 cm long and has an internal diameter of 22 mm and is made of Type 316 stainless steel. An entry 13 for monomers and the oxidant ingredient of a redox couple is via an inlet located downstream from the pump 12 outlet. An entry 14 for a water phase and the reductant ingredient of the redox couple is near the inlet of pump 12. A typical circulation rate in the loop section is 10—100 cm/sec. The rates at which the water phase and monomer phase are metered into the loop section define the solids content of the final products and the reactor output. A water spray 19 is used to remove exothermic heat from the loop section.

The overflow from the loop section, which contains emulsion having 5 to 20% unreacted monomer, passes into the plug section 11 via a T-piece 15 situated at a position separated from the raw material entry points.

The plug section is of the same material as the loop section but has a length of 440 cm. A pressure sustaining valve 16 and four cooling jackets 17 are provided. The cooling in the plug section is adjusted

3

generally to allow a higher temperature than in the loop section. The emulsion from the plug section is collected in a container 18 and allowed to mature.

To start the reaction, the loop section is filled with the appropriate water phase by a pump exterior to the reactor. The plug section is then filled with water via a T-piece 20. Immediately downstream from the T-piece 20 a static mixer 21 is provided followed by a sample pipe 22. The water phase is circulated around the loop section with an average velocity of 70 cm/sec. Water and monomer phases were then pumped continuously at a rate of 148 ml/min and 182 ml/min for Example No. 1 (see below) and 165 ml/min and 165 ml/min for Example No. 2 (also see below) respectively. Given that the reactor volume was 2300 ml, the mean residence time of reactants inside the reactor was 7 min for both Examples 1 and 2. After 1 minute, the reaction of monomers within the loop section produced a rapid rise in temperature and the temperature was allowed to increase until 55°C was reached. Cooling water via sprays 19 was then applied to the loop section to control the reaction temperature to 55°C. The overflow of emulsion, containing about 17% unreacted monomer on wet emulsion, was allowed to continue its reaction in the first 220 cm of the plug section without cooling water being applied to the first two of the four water jackets. After about eight minutes of operation the temperature at the mid-point of the plug section reached 80°C whereupon sufficient cooling water was applied to the third water jacket to control the reaction temperature at 80°C. The fourth water jacket was used to cool the emulsion down to about 60°C prior to passage through the pressure sustaining valve 16 and elution into a collection/maturing vessel 18.

Using the reactor above described alongside a known loop reactor of similar internal volume and throughput, two emulsions were prepared using the formulations given in Examples 1 and 2 below. The formulations contain both hydroxyethyl cellose and an anionic surfactant and the resulting emulsions are suitable for use in the manufacture of emulsion paint.

| Phase | Constituents | Example 1 (grams) | Example 2 (grams) |
|---|---|---|---|
| Monomer | Vinyl acetate | 420.6 | 374.0 |
| | *"VeoVa 10" | 105.0 | 93.0 |
| | t-Butyl hydroperoxide (as oxidant ingredient of redox couple) | 2.2 | 2.2 |
| Water | Hydroxy ethyl cellulose (10% sol.) (as viscosity improver and stabiliser) | 120.0 | 60.0 |
| | Anionic surfactant (30% sol.) | 24.0 | 60.0 |
| | Buffer | 1.5 | 1.5 |
| | Sodium metabisulphite (as reductant ingredient of redox couple) | 1.8 | 1.8 |
| | Water | 325.5 | 407.5 |
| Solid content | (Theoretical) | 54.9% | 49.6% |

* "VeoVa" is a trademark of Shell

A table comparing art and invention in respect of the above examples is now given:

4

| Feature | Example 1 | | Example 2 | | Notes below |
|---|---|---|---|---|---|
| | Prior art | Invention | Prior art | Invention | |
| Solids content % | 54.7 | 55.1 | 50.5 | 49.6 | |
| Viscosity (13s$^{-1}$) (Haake MVI) (Poise (Pas)) | 5.5 (0.55) | 41.0 (4.10) | 4.5 (0.45) | 10.3 (1.03) | A |
| Average particle size (microns) | 0.74 | 0.63 | 0.49 | 0.28 | B |
| Particle size range (μm) | 0.15—2.5 | 0.15—1.95 | 0.10—1.10 | 0.10—0.55 | C |
| Residual monomer at point and time of collection as % vinyl acetate | 3.0 | 0.9 | 4.6 | 2.7 | D |

Note A

The viscosity feature relates to the quantity of stabilizers needed. With the invention less stabiliser is needed for a given viscosity, and this may be significant both from a cost point of view and from a quality of product point of view. The product is improved if the end application depends on the purity of the polymer film, e.g. where water sensitivity of the polymer film is the overriding control of quality of performance, the possibility to formulate with lower water soluble stabilisers will be a major advantage.

Notes B & C

Both the average particle size and the particle size range are smaller with the invention and hence making such emulsions acceptable in paint formulations which call for smaller particle size binders to allow full development of gloss or make more efficient use of titanium dioxide pigments as opacifiers.

Note D

Processes according to the invention have lower monomer levels at the time and point of collection of product. This allows, for example, for reactor output to be increased simply by increasing the rate which the monomer and water phases are pumped into the reactor without exceeding the commercially acceptable limit (about 5%) of monomer in product at the collection point. Alternatively less maturing and/or post-treatment of this residual monomer is necessary at the same rate of production to achieve the final commercially acceptable level of residual monomer which may vary between a few parts per million to 0.5% depending on monomer and intended application.

Additionally, the possibility arises of producing core and shell polymers by a continuous process for the first time by forming cores in the loop section using a first monomer (or mixture) and by forming shells on the cores in the plug section using a second monomer (or mixture). A wide choice of core and shell materials is available and mention can be made of a vinyl acetate core with a vinyl acetate/"VeoVa" shell or a vinyl acetat/"VeoVa" core with a methyl methacrylate shell. The latter combination may be useful to provide a wall-covering coating with minimum blocking or as a binder for a paint with reduced tendency to burnish.

It has been found that monomer introduced into the plug does not tend to create its own particles but tends rather to grow on existing particles.

Preferably less than 30% of the total monomer used in any process (and usually the range of 5—25%) is fed into the plug section. If this figure is exceeded the emulsion properties of the product can be effected. The fact that up to 15% monomer can be fed to the plug section whilst producing a low unpolymerised monomer content in the product at the collection point indicates that polymerisation takes place in the plug section very rapidly.

In general, pre-emulsifying the monomer with water and additional surfactant fed to the plug section does not improve the emulsion produced. That is, it appears that the monomer is sufficiently dispersed in the outflow from the loop and does not require additional surfactant thus facilitating maximum core and shell effect and suppression of the formation of new particles. The use of a static mixer leads to a reduction of monomer in the product and is preferred but is not regarded as essential.

Example 3

Using a loop and plug reactor as previously described in Examples 1 and 2, the following constituents were used:

EP 0 145 325 B1

| Phase | Constituents | Formulation weight (grams) | Pump rate (ml/min) |
|---|---|---|---|
| Monomer (Loop) | Vinyl acetate<br>t-Butyl hydroperoxide (1) (as oxidant ingredient of redox couple) | 418.5<br>2.07 | } 88.2 |
| Water (Loop) | Hydroxyethyl cellulose (10% soln.) (as viscosity improver and stabilizer)<br>Anionic surfactant (30% soln.)<br>Sodium vinyl sulphonate (25% soln.)<br>Buffer (60% Soln.)<br>Sodium metabisulphite (as reductant ingredient of redox couple)<br>Water | 21.0<br><br><br>85.0<br>10.5<br>2.5<br>1.8<br><br>407.2 | } 102.0 |
| ·Monomer (Plug)<br>Solids content | Vinyl acetate<br>"VeoVa 10"<br>t-Butyl hydroperoxide (2)<br>(Theoretical) | 23.3<br>23.3<br>0.23<br>50.1% | } 9.8 |

Properties of the above example are now given:

| Feature | Identity |
|---|---|
| Proportion of monomer added to plug to create shell | 10% |
| Core composition | Vinyl acetate |
| Shell composition | Vinyl acetate: "VeoVa"::1:1 |

| Feature | Result |
|---|---|
| % Monomer at plug T-piece | >5% |
| % Vinyl acetate measured at sample valve | 2.8% |
| % Vinyl acetate at discharge from loop | 1.3% |

| Feature | Result |
|---|---|
| Solids content (%) | 50.0% |
| Viscosity (13s$^{-1}$) (Haake MV1), (poise (Pas)) | 1.6 (0.16) |
| Average particle size (μm) | 0.45 |

It may be concluded that from the known quantities of monomer introduced into the plug section, and the levels analysed at the sample valve and the discharge of the loop, that polymerisation was very rapid indeed in the plug section.

Example 4

Using a loop and plug reactor as previously described except that jackets 17 were temperature controlled as follows:

# EP 0 145 325 B1

Approximate jacket temperature

| Jacket 1 | 70°C |
|---|---|
| Jacket 2 | 15°C |
| Jacket 3 | 140°C |
| Jacket 4 | 15°C |

Incorporated in the monomer pahse with a proprietary blowing agent "Nitropore" OBSH (Reg. Trade Mark—Stepan Chemicals), a material which decomposes to liberate nitrogen at a decomposition temperature of (or above) 127°C. The gas yield of this material was 125 ml nitrogen per gram at STP. The formulation used was as follows:

| Phase | Constituents | Formulation weight (grams) | Pump rate (ml/min) |
|---|---|---|---|
| Monomer | Vinyl acetate | 420.0 | |
| | "VeoVa 10" | 105.0 | |
| | t-Butyl hydroperoxide (as oxidant | 2.2 | 181 |
| | ingredient of redox couple) | | |
| | "Nitropore" OBSH | 8.0 | |
| Water | Hydroxyethyl cellulose (10% soln.) | 120.0 | |
| | (as viscosity stabiliser and improver) | | |
| | Anionic surfactant (30% soln.) | 24.0 | |
| | Buffer (60% soln.) | 1.5 | 148 |
| | Sodium metabilsulphite (as reductant | 2.0 | |
| | ingredient of redox couple) | | |
| | Water | 323.5 | |
| Solids content | (Theoretical) | 54.4 | |

The above formulation was previously run without the presence of "Nitropore"OBSH. A comparison of final properties is given as follows:

| Feature | Comparative example without blowing agent | Example 4, including Nitropore OBSH |
|---|---|---|
| Solids content (%) | 55.8 | 55.4 |
| Viscosity $(13s^{-1}$ (Haake MV1), (poise (pas)) | 21.4 (2.14) | 197.0 (19.70) |
| pH | 4.2 | 3.5 |
| Average particle size (µm) | 0.89 | 1.60 |

It can be calculated that the maximum increase in particle size solely attributable to nitrogen gas blowing should be from 0.89 µm to 1.24 µm. Clearly the measured particle size of the example cannot be solely due to nitrogen gas, and the presence of the blowing agent may have modified the course of the polymerisation also. However if the concept of particle number is considered, it is known that increase in particle size at constant particle number decreases free space and increases viscosity, while an increase in particle size with decrease in particle number increases free space and decreases viscosity. The latter situation may arise from, for example, coalescence of particles. The increase in particle size coupled with a very great increase in viscosity supports the conclusion that the particles were expanded by the decomposition of the blowing agent in the plug section of the reactor.

## Claims

1. A process for making emulsion polymerised products using a pressurised and force circulated loop reactor of tubular form so that reactant feeds and reactant products experience recirculation therein

7

characterised in that the process comprises take-off from the loop reactor via a flow through reactor forming with the loop reactor a reactor apparatus having two sections namely a loop section (10) and a plug section (11) and the loop section is controlled so that a partially developed product arises of established particle size with unreacted monomer present in the range of 5 to 20% an the plug section is controlled so that a fully developed product emerges from the plug section having unreacted monomer present of less than 5% and an average particle size of less than 2.5 µm.

2. A process as claimed in claim 1 in which the loop section is controlled so that the partially developed product comprises particle cores and the plug section is controlled so that the fully developed product comprises cores coated with a shell derived from an additional monomer introduced into the plug section.

3. A process as claimed in Claim 1 in which the partially developed product comprises particles including a dormant expansion agent and the fully developed product comprises particles expanded by activating said agent.

4. A process as claimed in Claim 1 in which the loop section is constructed and arranged to have a volume less than one third of the total volume of the reactor apparatus.

5. A process as claimed in Claim 1 in which the plug section is controlled to have various zones of temperature.

6. A process as claimed in Claim 1 in which the plug section is controlled to have a higher temperature than the loop section.

**Patentansprüche**

1. Verfahren zur Herstellung eines durch Emulsionspolymerisation hergestellten Produktes unter Verwendung eines mit Druck beaufschlagten und zwangsumgewälzten Schleifenreaktors in Rohrform in einer Weise, daß zugeführte Reaktanden und Reaktionsprodukte darin zurückgeführt werden, dadurch gekennzeichnet, daß es einen Verfahrensschritt des Abziehens des Produktes vom Schleifenreaktor mittels eines Durchflußreaktors umfaßt, der mit dem Schleifenreaktor eine Reaktorapparatur mit zwei Bereichen, nämlich einem Schleifen-Bereich (10) und einem Einschub-Bereich (plug section) (11) bildet, wobei der Schleifen-Bereich so betrieben wird, daß ein teilpolymerisiertes Produkt mit fester Teilchengröße und einem Anteil an unumgesetztem Monomer im Bereich von 5 bis 20% entsteht, und der Einschub-Bereich (plug section) so betrieben wird, daß ein voll durchpolymerisiertes Produkt beim Verlassen des Einschub-Berreichs abgezogen wird, das einen Anteil an unumgesetztem Monomer von unter 5% und eine mittlere Teilchengröße von unter 2,5 µm aufweist.

2. Verfahren nach Anspruch 1, worin der Schleifen-Bereich so betrieben wird, daß das teilpolymerisierte Produkt aus Teilchen-Kernen besteht, und der Einschub-Bereich so betrieben wird, daß das voll durchpolymerisierte Produkt aus Teilchen-Kernen besteht, die mit einer Hülle eines Polymers überzogen sind, das sich nach Zusatz eines weiteren Monomers in den Einschub-Bereich gebildet hat.

3. Verfahren nach Anspruch 1, worin das teilpolymerisierte Produkt aus Teilchen mit einem inaktiven Treibmittel besteht und das voll durchpolymerisierte Produkt aus Teilchen besteht, die durch Aktivieren des Treibmittels aufgeschäumt wurden.

4. Verfahren nach Anspruch 1, worin der Schleifen-Bereich so aufgebaut und angeordnet ist, daß er ein Volumen von weniger als ein Drittel des Gesamtvolumens der Reaktorapparatur hat.

5. Verfahren nach Anspruch 1, worin der Einschub-Bereich so betrieben wird, daß er verschiedene Temperaturzonen aufweist.

6. Verfahren nach Anspruch 1, worin der Einschub-Bereich so betrieben wird, daß er eine höhere Temperatur als der Schleifen-Bereich aufweist.

**Revendications**

1. Procédé de fabrication de produits polymérisés en émulsion, utilisant un réacteur pressurisé, à boucle de circulation forcée, de forme tubulaire, de manière que l'alimentation en réactants et les produits de réaction y subissent une recirculation, caractérisé par le fait qu'on opère un prélèvement du réacteur à boucle par un courant traversant le réacteur et formant avec le réacteur à boucle un appareil de réaction à deux sections, à savoir une section boucle (10) et une section de connexion (11), et la section boucle est commandée de manière que se crée un produit partiellement développé de dimension de particule établie, avec un monomère n'ayant pas réagi présent dans les limites de 5 à 20%, et la section de connexion est commandée de manière qu'émerge, de la section de connexion, un produit totalement développé ayant du monomère d'ayant pas réagi présent à raison de moins de 5% et une dimension de particule moyenne inférieure à 2,5 µm.

2. Procédé selon la revendication 1, dans lequel la section boucle est commandée de manière que le produit partiellement développé comprend des noyaux de particule et la section de connexion est commandée de manière que le produit totalement développé comprend des noyaux recouverts d'une enveloppe dérivée d'un monomère additionnel introduit dans la section de connexion.

3. Procédé selon la revendication 1, dans lequel le produit partiellement développé comprend des particules incluant un agent d'expansion assoupi et le produit totalement développé comprend des particules expansées par activation dudit agent.

4. Procédé selon la revendication 1, dans lequel la section boucle est construite et agencée pour avoir un volume inférieur au tiers du volume total de l'appareil de réaction.

5. Procédé selon la revendication 1, dans lequel la section de connexion est commandée pour présenter des zones variées de température.

6. Procédé selon la revendication 1, dans lequel la section de connexion est commandée pour avoir une température supérieure à celle de la section boucle.

EP 0 145 325 B1